# DEMANDE DE BREVET EUROPEEN

(11) **EP 3 026 616 A1**
(43) Date de publication de la demande: **01.06.2016**
(21) Numéro de dépôt: 15196326.1
(22) Date de dépôt: 25.11.2015
(51) Int. Cl.: G06Q 10/08, G06Q 50/30

(54) **PROCÉDÉ DE TRAÇABILITÉ MÉTROLOGIQUE LORS DU TRANSPORT D'UNE CARGAISON**

(30) Priorité: 26.11.2014 FR 1461491
(71) Demandeur: E.I.P., 75013 Paris (FR)
(72) Inventeur: MOREL-FATIO, Bruno, 75008 PARIS (FR)
(74) Mandataire: Casalonga

(57) **Abrégé**

Procédé de traçabilité métrologique d'une cargaison lors de son transport par un véhicule (6) d'un lieu de chargement à un lieu de livraison, comprenant sur le lieu de chargement :
- une lecture (100) automatique d'un identifiant unique d'un compartiment (7) du conteneur,
- une mesure (110) de la quantité chargée dans ledit compartiment (7),
- une association (120) de l'identifiant lu et de ladite mesure,
- une mémorisation (140) sécurisée des deux informations associées au sein d'une mémoire implantée sur le lieu de chargement (4),
- une activation (150) de moyens de surveillance (13) de la non ouverture d'un orifice montés sur le véhicule (6) pour chacun des orifices sur le véhicule permettant l'accès à la cargaison, les moyens de surveillance (13) étant configurés pour passer, à la suite de leur activation, d'un état scellé à un état descellé en cas de tentative d'ouverture d'un orifice d'accès à la cargaison.

## Description

L'invention concerne la traçabilité métrologique lors du transport d'une cargaison par un véhicule.

Il existe toujours des risques de manipulations frauduleuses de la cargaison au cours de son transport par un véhicule et notamment des retraits d'une partie de la cargaison.

Pour contrôler des fraudes, ou anomalies, éventuelles, il est connu de réaliser une mesure sur le lieu de livraison ou bien de réaliser une livraison par cargaisons scellées.

Dans les cas de mesures sur le lieu de livraison, le liquide objet de la transaction est mesuré de manière contradictoire en présence des parties, à savoir le transporteur et le réceptionnaire. Lors de chaque transaction, il est porté à la connaissance du réceptionnaire le résultat de la mesure effectuée sur le lieu de livraison.

Les mesurages peuvent être réalisés à l'aide d'un dispositif de jaugeage unique dont la manipulation pour chaque compartiment nécessite de monter sur la citerne, ce qui représente un risque élevé d'accident pour l'opérateur.

Les mesurages peuvent aussi être réalisés à l'aide de dispositifs de jaugeage automatiques par compartiment. Leur multiplicité rend l'ensemble onéreux à l'installation et à l'entretien.

Les mesurages peuvent également être réalisés à l'aide de dispositifs de mesure de volume qui allongent notablement les durées de livraison. De plus, le déchargement simultané de plusieurs compartiments nécessite la mise en oeuvre de plusieurs de ces dispositifs de mesure, rendant l'ensemble onéreux.

En cas de contestation, le réceptionnaire de la cargaison dispose des informations données par la mesure effectuée sur le lieu de livraison par un appareil de mesure approuvé.

Une livraison par cargaisons scellées est définie comme un processus au cours duquel une quantité mesurée de produit est chargée dans une cargaison qui est ensuite scellée, contrôlée pendant le transport, puis déchargée sans nécessiter de nouveau mesurage. Ainsi, durant la phase de transport, un dispositif surveille en permanence la non-ouverture des différents orifices d'accès à la cargaison de chaque compartiment. Chaque compartiment est ainsi scellé électroniquement.

Dans les cas de livraison par cargaisons scellées, dans l'état actuel de la technique, les informations de mesurage elles-mêmes doivent impérativement être accessibles aux parties sur le lieu de livraison. Le transfert et le traitement sécurisé de ces informations de mesurage jusqu'au lieu de livraison obligent donc à la mise en oeuvre d'équipements onéreux à l'installation et à l'entretien.

Un exemple connu de livraison par cargaisons scellées utilise des dispositifs de transfert des quantités mesurées, notés aussi DTQM. En cas de contestation, le réceptionnaire dispose dans ce cas des informations relatives à la mesure effectuée lors du chargement et transférées sur le terminal embarqué sur le conteneur du véhicule, de la garantie de l'intégrité du produit durant la phase de transport en constatant l'absence de bris de scellement.

L'invention a pour objectif de pallier ces inconvénients en permettant de garantir qu'une cargaison dont la mesure de référence a été réalisée et mémorisée lors du chargement est restée intègre jusqu'au lieu de livraison et qu'il existe un lien sécurisé entre cette mesure de référence et cette cargaison présentée à un réceptionnaire sur le lieu de livraison.

Selon un aspect de l'invention, il est proposé un procédé de traçabilité métrologique d'une cargaison lors de son transport par un véhicule d'un lieu de chargement à un lieu de livraison. Le procédé comprend, lorsque le véhicule est sur le lieu de chargement :
- une lecture automatique d'un identifiant unique d'un compartiment d'un conteneur du véhicule dans lequel la cargaison est chargée,
- une mesure de la quantité chargée dans ledit compartiment,
- une association de l'identifiant unique lu et de ladite mesure,
- une mémorisation sécurisée des deux informations associées au sein d'une mémoire implantée sur le lieu de chargement,
- une activation de moyens de surveillance montés sur le véhicule pour chacun des orifices sur le véhicule permettant l'accès à la cargaison, les moyens de surveillance étant configurés pour passer, à la suite de leur activation, d'un état scellé à un état descellé en cas de tentative d'ouverture d'un orifice d'accès à la cargaison.

On entend par l'expression « lors de son transport », la période commençant à la déconnexion du bras de chargement du compartiment du véhicule sur le lieu de chargement et se terminant à la présentation de la cargaison avant le déchargement, c'est-à-dire avant le descellement de la cargaison sur le lieu de livraison.

La mémorisation des informations de quantité au sein du dépôt permet de s'acquitter de moyens électroniques de mémorisation de ces mêmes quantités sur un terminal embarqué sur les véhicules de transport. Ceci permet de réduire notablement les coûts de matériel embarqué sur les véhicules, mais aussi de réduire les tentatives de fraudes électroniques sur le véhicule. Les informations étant mémorisées de manière sécurisée sur le lieu de chargement, le réceptionnaire peut obtenir les mesures sécurisées mémorisées sur le lieu de chargement à l'aide de l'identifiant unique et constater toute éventuelle anomalie qui serait apparue au cours du transport. Cette constatation peut ensuite être utilisée comme moyen de preuve légale dans la mesure où elle est basée sur un appareil de mesure approuvé.

Les moyens de surveillance sont configurés pour repasser à un état scellé uniquement à la suite d'un autre chargement.

Pour diverses raisons pratiques et économiques, il est avantageux dans certains cas de pouvoir livrer une station service en dehors des horaires d'ouverture, en absence de tout personnel dans la station. Dans ce cas, seule une des parties, le transporteur, est présent sur le lieu de livraison. Aucun constat contradictoire ne peut donc avoir lieu.

Dans ce cas, il apparaît que seul le principe des « Livraisons par cargaisons scellées » peut fournir les garanties nécessaires :
- à la conservation de l'intégrité de la cargaison durant la phase de transport, grâce au scellement électronique,
- à ce que 100% de la cargaison soit effectivement livrée en station, par détection automatique de la vacuité du compartiment en fin de livraison.

Pour ce faire, un des moyens est d'utiliser les dispositifs anti-mélange présents en station service. Ceux-ci sont constitués de « Tag », correspondant à des modules électroniques de modulation de courant de sécurité intrinsèque, installés sur les cuves de la station service. Ceux-ci fournissent une identification unique et un code indiquant la nature du produit attendu. Pendant toute la connexion du flexible entre l'adaptateur de la citerne et la cuve de la station service ces informations parviennent en continu au camion citerne. Il devient possible pour le camion citerne de tracer et détecter le début et la fin effective de la livraison. Il suffit en fin de livraison que le camion citerne détecte la vacuité du compartiment correspondant, afin de valider la livraison en absence.

De préférence, la lecture de l'identifiant du compartiment est réalisée lors du couplage d'un coupleur d'un bras de chargement avec un adaptateur du compartiment du conteneur avant le début du transfert de produit entre le bras de chargement et le compartiment.

Avantageusement, le procédé peut comprendre, lors du déchargement sur le lieu de livraison, un accès via des moyens de transmission, tels qu'une connexion sans fil, aux données sécurisées relatives à ladite mesure faite sur le lieu de chargement.

Le procédé peut en outre comprendre un enregistrement, par les moyens de surveillance, de la position GPS, c'est-à-dire de la position par géolocalisation, du véhicule à chaque événement pouvant affecter l'état du compartiment du conteneur comprenant la cargaison.

Selon un autre aspect, il est proposé un système de traçabilité métrologique d'une cargaison lors de son transport par un véhicule d'un lieu de chargement à un lieu de livraison, comprenant :
- un lecteur automatique apte à lire sur le lieu de chargement un identifiant unique d'un compartiment d'un conteneur du véhicule dans lequel la cargaison est chargée,
- un ensemble de mesurage apte à mesurer sur le lieu de chargement la quantité chargée dans le compartiment du conteneur, l'ensemble de mesurage comportant des moyens de mémorisation pour enregistrer en association l'identifiant et la mesure,
- des moyens de communication sur le lieu de chargement aptes à transmettre aux moyens de mémorisation de l'ensemble de mesurage l'identifiant lu,
- des moyens de surveillance électronique montés sur le véhicule pour chacun des orifices sur le véhicule permettant l'accès à la cargaison,
- une unité de traitement configurée pour transmettre un signal d'activation du scellement électronique des orifices d'accès à la cargaison en fin de chargement du compartiment, les moyens de surveillance étant configurés pour passer, à la suite de leur activation, d'un état scellé à un état descellé en cas de tentative d'ouverture d'un orifice d'accès à la cargaison.

De préférence, le lecteur est monté sur un coupleur d'un bras de chargement et l'identifiant unique est monté sur un adaptateur du compartiment du conteneur du véhicule.

Avantageusement, le système peut en outre comprendre des moyens de transmission aptes à accéder aux données sécurisées relatives à ladite mesure faite sur le lieu de chargement et enregistrées dans les moyens de mémorisation de l'ensemble de mesurage.

Le système peut également comprendre des moyens de géolocalisation du véhicule, les moyens de surveillance comprenant un module configuré pour enregistrer la position par géolocalisation du véhicule à chaque événement pouvant affecter l'état du compartiment du conteneur comprenant la cargaison.

Les moyens de surveillance de la non ouverture d'un adaptateur, principal orifice d'accès au compartiment contenant une cargaison, peuvent avantageusement comprendre une capsule conformée pour coopérer avec l'adaptateur et comprenant un transmetteur configuré pour transmettre, par exemple par voie radio, après le chargement du produit l'état de bonne fermeture dudit orifice, à la fois au moyen de communication sur le lieu de chargement, et au moyen de réception monté sur le véhicule.

Le bon positionnement sur les adaptateurs de ces capsules, dites instrumentées, peut être contrôlé par la lecture de radio étiquettes solidaires des adaptateurs grâce à des lecteurs de type RFID.

Le système peut comprendre en outre un moyen de blocage des ouvertures des adaptateurs apte à empêcher simultanément l'ouverture mécanique de plusieurs adaptateurs du véhicule, le moyen de blocage comportant un lecteur apte à lire une radio-étiquette montée sur la capsule lorsque le moyen de blocage est correctement positionné en position de blocage.

Le dispositif de blocage des ouvertures des adaptateurs peut comprendre une barre de blocage des manettes d'ouverture de vanne ou une barre de maintien des capsules en position.

D'autres avantages et caractéristiques de l'invention apparaîtront à l'examen de la description détaillée d'un mode de mise en oeuvre et d'un mode de réalisation, nullement limitatifs, et des dessins annexés, sur lesquels :
- la figure 1 présente un organigramme d'un procédé de traçabilité métrologique d'une cargaison lors de son transport selon un mode de mise en oeuvre de l'invention ;
- la figure 2 représente schématiquement un système de traçabilité métrologique d'une cargaison lors de son transport selon un mode de réalisation de l'invention.

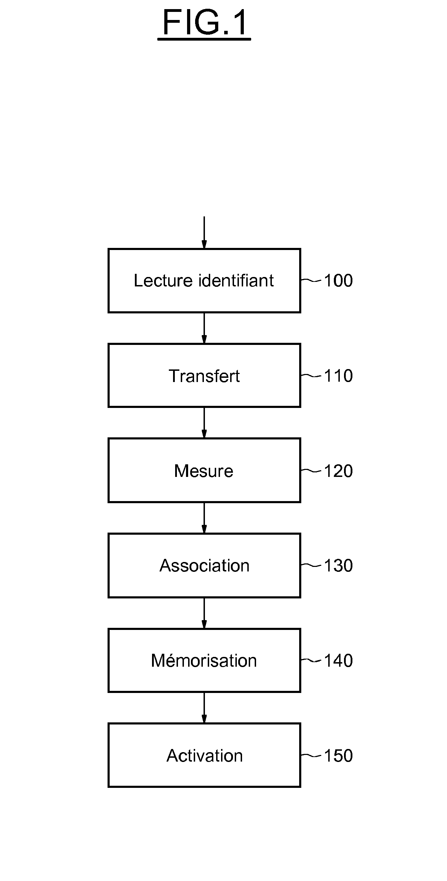

Sur la figure 1 est présenté un organigramme d'un procédé de traçabilité métrologique d'une cargaison lors de son transport selon un mode de mise en oeuvre de l'invention.

Dans une première étape 100 du procédé, on lit automatiquement sur le lieu de chargement un identifiant unique associé à un compartiment du conteneur du véhicule de transport dans lequel la cargaison est ou a été chargée. La lecture est réalisée, dans ce mode de mise en oeuvre, lors du couplage mécanique du coupleur du bras de chargement à l'adaptateur du compartiment. Le bras de chargement est un conduit permettant de raccorder un bac du dépôt par exemple à l'orifice d'entrée d'un compartiment d'une citerne d'un véhicule par exemple. Le compartiment est muni dans ce cas d'une bouche nommée adaptateur et conformée pour coopérer avec l'extrémité, nommée coupleur, du bras de chargement et former un raccordement mécanique étanche.

L'adaptateur comporte une radio étiquette, ou « rfid tag » en anglais, rfid signifiant « radio frequency identification », et le coupleur un lecteur électronique configuré pour émettre des ondes radio.

Dans le mode de mise en oeuvre présenté, la lecture de l'identifiant est réalisée lors du couplage, c'est-à-dire avant le début du chargement de la cargaison dans le compartiment du véhicule citerne.

Dans une étape suivante 110, on transmet l'identifiant lu à une unité de traitement, ou concentrateur, présent sur le lieu de chargement.

Dans une étape 120, on réalise une mesure de la quantité de produit transférée depuis le bras de chargement vers le compartiment du véhicule citerne. La mesure est réalisée à l'aide d'un ensemble de mesurage approuvé.

La mesure peut être réalisée à l'issue du transfert au moyen d'une jauge optique ou d'un autre moyen de mesure.

Dans une étape suivante 130, on associe la quantité mesurée à l'identifiant du compartiment, puis dans une étape suivante 140, on mémorise de manière sécurisée dans l'ensemble de mesurage les informations associées à l'étape 130.

Dans une étape suivante 150, on active à l'aide d'un signal émis par le concentrateur des moyens de scellement électronique des orifices d'accès à la cargaison pour le compartiment. Les moyens de surveillance sont ainsi configurés pour passer d'un état scellé à un état descellé en cas de tentative d'ouverture d'un des orifices d'accès à la cargaison du compartiment.

Lors de la livraison, le réceptionnaire de la marchandise dispose pour chaque compartiment, avant leur déchargement, de l'identifiant unique de chaque compartiment et de l'information de garantie pour chacun des compartiments de l'intégrité de la cargaison durant la phase de transport.

L'identifiant unique figure sur la plaque d'identification de l'étiquette électronique, ou radio étiquette, du compartiment situé sur l'adaptateur correspondant.

La garantie de l'intégrité de la cargaison est donnée par l'absence de bris de scellement.

En cas de contestation, il est possible, étant donné le procédé mis en oeuvre de consulter a posteriori les informations de mesure mémorisées dans le journal métrologique du concentrateur sur le lieu de chargement lors du chargement de ce compartiment. La recherche se fait à l'aide de l'identifiant unique du compartiment figurant sur le véhicule citerne.

Le procédé peut prévoir en outre, après l'étape 130 d'association des informations, l'impression sur les différents documents générés par l'automatisme de supervision des chargements en dépôt, notamment sur des tickets générés en borne de sortie à destination du chauffeur du véhicule et qui peuvent être remis aux réceptionnaires, par exemple aux réceptionnaires des stations services dans le cas de véhicule citerne transportant des hydrocarbures.

Le procédé peut également prévoir, par exemple, après l'étape 130, la transmission des informations vers un terminal du véhicule de transport pour permettre l'affichage sur le terminal du véhicule des informations non métrologiques de chargement par compartiment, notamment le lieu de chargement, ou lieu de dépôt, l'îlot de chargement du lieu de dépôt, l'identifiant unique du compartiment, le numéro de la mesure, l'indication du moyen de mesure, le volume du produit, la nature du produit de base et/ou du produit commercial.

Par informations « non métrologiques », on entend des informations qui ne sont pas garanties légalement.

Il est également possible de prévoir dans le procédé mis en oeuvre une communication entre le terminal du véhicule de transport utilisé en serveur pour alimenter en données différents clients matérialisés par des terminaux à distances. Ceci permet notamment au chauffeur d'aller dans le local de la station service pour présenter au réceptionnaire les données relatives aux compartiments avant la livraison et après la livraison, notamment à partir d'une détermination de l'état de vacuité du compartiment grâce par exemple à des capteurs de vacuité et des capteurs de position des clapets de fond prévus dans le compartiment.

Le terminal du véhicule peut également être équipé d'une liaison GPRS pour échanger des données en temps réel avec le transporteur et/ou le pétrolier réceptionnaire. Les données échangées peuvent comprendre les données relatives au chargement des compartiments en dépôt, une signalisation d'évènements particuliers tels que le descellement durant la phase de transport, des données relatives au déchargement des compartiments, et un transfert périodique du journal des évènements du véhicule.

En complément, le procédé peut également prévoir un enregistrement de la position GPS du véhicule lors de la constatation électronique d'une tentative de bris de scellement d'un orifice. Pour cela, il peut être intégré au terminal du véhicule un GPS afin de pouvoir ajouter l'information de localisation associée à chaque événement particulier pouvant affecter l'état du compartiment, comme par exemple le chargement en dépôt, l'éventuel descellement durant la phase de transport, la présentation de la cargaison au réceptionnaire, le début de la livraison entraînant un descellement, et la fin de livraison détectée par la vacuité du compartiment.

Il peut également être intégré aux équipements du véhicule, la lecture optionnelle d'identifiant anti-mélange présents sur les cuves sur le lieu de livraison.

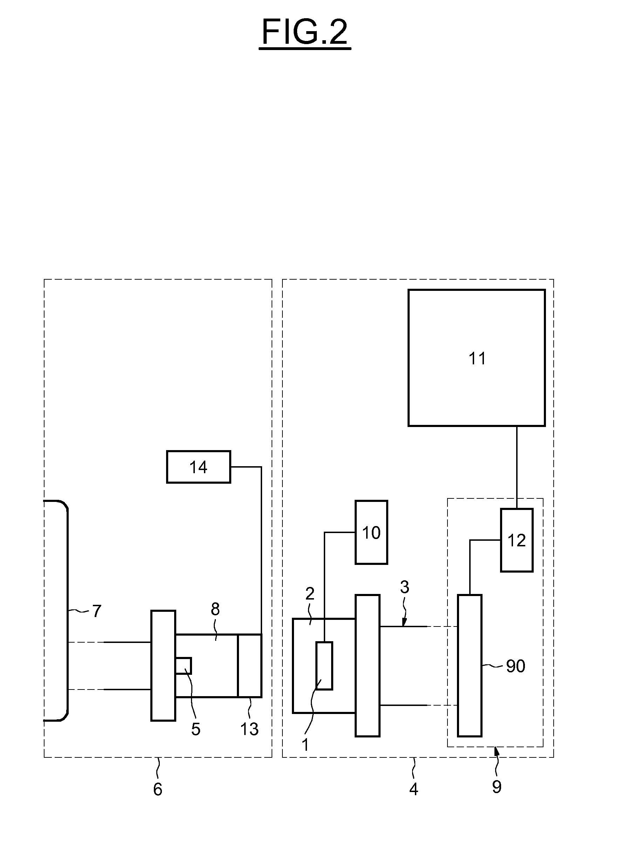

Sur la figure 2 est représenté de manière schématique un système de traçabilité métrologique d'une cargaison lors de son transport selon un mode de réalisation apte à mettre en oeuvre le procédé présenté sur la figure 1.

Le système de traçabilité métrologique comprend un lecteur 1 automatique monté sur un coupleur 2 d'un bras de chargement 3 d'un lieu de chargement 4.

Le système comprend en outre un identifiant 5 unique d'un compartiment 7 du conteneur du véhicule 6 dans lequel la cargaison est chargée. L'identifiant unique 5 est monté sous la forme d'une étiquette électronique sur un adaptateur 8 du compartiment 6. Le lecteur 1 est configuré pour lire l'identifiant unique 5.

Le système comprend en outre un ensemble de mesurage 9 muni d'un module de mesure 90 apte à mesurer la quantité introduite dans le compartiment 7 du conteneur via l'adaptateur 8 lors du chargement, et des moyens de communication 10 sur le lieu de chargement 4 aptes à transmettre l'identifiant lu vers une unité de traitement 11 située sur le lieu de chargement, ou dépôt. L'ensemble de mesurage 9 comprend en outre des moyens de mémorisation 12. L'unité de traitement 11 est configurée pour transmettre l'identifiant reçu aux moyens de mémorisation 12 de l'ensemble de mesurage 9. Les moyens de mémorisation 12 sont configurés pour enregistrer et associer l'identifiant et la mesure dans des journaux métrologiques.

Le système comprend en outre des moyens 13 de surveillance électronique montés sur le véhicule 6 pour chacun des orifices permettant l'accès à la cargaison. L'unité de traitement 11 est configurée pour émettre un signal d'activation du scellement électronique des orifices d'accès à la cargaison en fin de chargement du compartiment. Le signal d'activation est reçu par des moyens de réception 14 prévus sur le véhicule 6 et couplés aux moyens 13 de surveillance pour placer les moyens 13 de surveillance dans un état actif dans lequel les moyens 13 de surveillance sont configurés pour passer d'un état scellé à un état descellé en cas de tentative d'ouverture de l'orifice d'accès à la cargaison.

L'invention fournit un procédé et un système associé permettant de garantir qu'une cargaison dont la mesure de référence a été réalisée et mémorisée lors du chargement est restée intègre jusqu'au lieu de livraison et qu'il existe un lien sécurisé entre cette mesure de référence et cette cargaison présentée à un réceptionnaire sur le lieu de livraison.

## Revendications

1. Procédé de traçabilité métrologique d'une cargaison lors de son transport par un véhicule (6) d'un lieu de chargement (4) à un lieu de livraison, comprenant lorsque le véhicule (6) est sur le lieu de chargement (4) :
- une lecture (100) automatique d'un identifiant (5) unique d'un compartiment (7) d'un conteneur du véhicule (6) dans lequel la cargaison est chargée,
- une mesure (110) de la quantité chargée dans ledit compartiment (7),
- une association (120) de l'identifiant (5) unique lu et de ladite mesure,
- une mémorisation (140) sécurisée des deux informations associées au sein d'une mémoire (12) implantée sur le lieu de chargement, (4)
- une activation (150) de moyens de surveillance (13) de la non-ouverture d'un orifice montés sur le véhicule pour chacun des orifices sur le véhicule permettant l'accès à la cargaison, les moyens de surveillance (13) étant configurés pour passer, à la suite de leur activation, d'un état scellé à un état descellé en cas de tentative d'ouverture d'un orifice d'accès à la cargaison.

2. Procédé selon la revendication 1, dans lequel la lecture (100) de l'identifiant (5) du compartiment (7) est réalisée lors du couplage d'un coupleur (2) d'un bras de chargement (3) avec un adaptateur (8) du compartiment (7) du conteneur avant l'initiation du transfert de produit entre le bras de chargement (3) et le compartiment (7).

3. Procédé selon l'une des revendications 1 ou 2, comprenant, sur le lieu de livraison, un accès via des moyens de transmission aux données sécurisées relatives à ladite mesure faite sur le lieu de chargement (4).

4. Procédé selon l'une des revendications 1 à 3, comprenant en outre un enregistrement, par les moyens de surveillance (13), de la position par géolocalisation du véhicule à chaque événement pouvant affecter l'état du compartiment du conteneur comprenant la cargaison.

5. Système de traçabilité métrologique d'une cargaison lors de son transport par un véhicule (6) d'un lieu de chargement (4) à un lieu de livraison, comprenant :
- un lecteur (1) automatique apte à lire sur le lieu de chargement (4) un identifiant (5) unique d'un compartiment (7) d'un conteneur du véhicule (6) dans lequel la cargaison est chargée,
- un ensemble de mesurage (9) apte à mesurer sur le lieu de chargement (4) une quantité chargée dans le compartiment (7) du conteneur, l'ensemble de mesurage (9) comportant des moyens de mémorisation (12) pour enregistrer en association l'identifiant et ladite mesure,
- des moyens de communication (10) sur le lieu de chargement (4) aptes à transmettre aux moyens de mémorisation (12) de l'ensemble de mesurage (9) l'identifiant lu,
- des moyens (13) de surveillance électronique de la non-ouverture d'un orifice montés sur le véhicule (6) pour chacun des orifices sur le véhicule (6) permettant l'accès à la cargaison,
- une unité de traitement (11) configurée pour émettre un signal d'activation du scellement électronique des orifices d'accès à la cargaison en fin de chargement du compartiment, les moyens de surveillance (13) étant configurés pour passer, à la suite de leur activation, d'un état scellé à un état descellé en cas de tentative d'ouverture d'un orifice d'accès à la cargaison.

6. Système selon la revendication 5, dans lequel le lecteur (1) est monté sur un coupleur (2) d'un bras de chargement (3) et l'identifiant (5) unique est monté sur un adaptateur (8) du compartiment (7) du conteneur du véhicule (6).

7. Système selon l'une des revendications 5 ou 6, comprenant en outre des moyens de connexions sans fil aptes à accéder aux données sécurisées relatives à la mesure de référence faite sur la cargaison sur le lieu de chargement (4) et enregistrées dans les moyens de mémorisation (12) de l'ensemble de mesurage (9).

8. Système selon l'une des revendications 5 à 7, comprenant des moyens de géolocalisation du véhicule, les moyens de surveillance (13) comprenant un module configuré pour enregistrer la position par géolocalisation du véhicule à chaque événement pouvant affecter l'état du compartiment du conteneur comprenant la cargaison.

9. Système selon l'une des revendications 6 à 8, dans lequel les moyens de surveillance (13) de la non-ouverture d'un orifice comprennent une capsule conformée pour coopérer avec l'adaptateur (8) et comportant un transmetteur configuré pour transmettre après le chargement du produit l'état de bonne fermeture dudit orifice, à la fois aux moyens de communication (10) sur le lieu de chargement (4), et à des moyens de réception (14) montés sur le véhicule.

10. Système selon la revendication 9, comprenant en outre un moyen de blocage des ouvertures des adaptateurs (8) apte à empêcher simultanément l'ouverture mécanique de plusieurs adaptateurs (8) d'un véhicule, le moyen de blocage comportant un lecteur apte à lire une radio-étiquette montée sur la capsule lorsque le moyen de blocage est correctement positionné en position de blocage.
